# FASCICULE DE BREVET EUROPEEN

(11) **EP 2 600 698 B1**
(45) Date de publication et mention de la délivrance du brevet: **20.01.2016**
(21) Numéro de dépôt: 11306588.2
(22) Date de dépôt: 30.11.2011
(51) Int. Cl.: H05B 39/04

(54) **Dispositif variateur de l'intensité de la lumière dans des charges lumineuses**
Vorrichtung zur Veränderung der Lichtintensität in Leuchtladungen
Device for varying the intensity of the light in luminous charges

(43) Date de publication de la demande: 05.06.2013
(73) Titulaire: Hager Controls SAS, 67700 Saverne (FR)
(72) Inventeur: Elsass, Marc, 67140 Barr (FR); Poisson, Christophe, 67700 Furchhausen (FR)
(74) Mandataire: Nuss, Laurent

(56) Documents cités:
- EP-A1- 0 588 273
- EP-A1- 1 784 059
- WO-A1-2007/042598
- WO-A1-2007/068040
- FR-A1- 2 802 360

## Description

L'invention concerne les dispositifs variateurs de lumière, et plus particulièrement la possibilité pour de tels dispositifs de s'adapter à toutes les technologies de lampes actuellement disponibles sur le marché, bien entendu lorsqu'elles sont dimmables. Elle a également trait à un procédé de fonctionnement d'un tel dispositif.

De manière très générale, comme cela et par exemple divulgué dans les documents WO 2007/042598 et EP 0 588 273, les dispositifs variateurs ont pour vocation d'allumer ou d'éteindre des lampes à un niveau de luminance variable, mais également de régler leur niveau de luminosité en temps réel à l'aide d'un organe de commande. Ce réglage s'effectue classiquement par découpage de phase, la lampe étant alors une charge lumineuse pilotée par un étage de puissance soit en mode coupure à l'angle, par exemple pour les luminaires de type ampoule à filament, soit en mode conduction à l'angle notamment pour les charges lumineuses à caractère inductif comme les transformateurs ferromagnétiques pour ampoule halogène 12 ou 24 volts. Ce type de dispositif variateur concerne les lampes classiques, à incandescence ou halogènes, ainsi que des sources plus récentes comme les lampes fluo-compactes ou à LED (diodes électroluminescentes).

Relativement nouvelles venues dans la sphère des sources de lumière, les lampes fluorescentes compactes, dites également lampes fluo-compactes ou lampes CFL, ont aussi un niveau de luminosité qui est réglable, de préférence en mode coupure à l'angle notamment car ce mode permet de limiter les émissions de fréquences parasites sur le réseau, que l'on désigne communément par "émissions conduites". Cependant, lorsque la charge CFL est de petite puissance, sous forme par exemple d'une ou deux lampes de 15 watts chacune, elle peut être pilotée en mode de conduction à l'angle si le dispositif variateur permet un tel mode de découpage et s'il est pourvu d'un dispositif qui permet de ralentir la vitesse de commutation des composants de l'étage de puissance en vue de réduire lesdites émissions conduites.

Le fonctionnement en mode de conduction à l'angle implique cependant des pertes en commutation et génère par conséquent un échauffement : il n'est pour cette raison pas recommandé avec les ampoules à filament, incandescentes ou halogènes.

L'idée qui est à la base de l'invention étant de proposer un dispositif variateur de lumière qui puisse s'adapter automatiquement à la charge lumineuse qui lui est raccordée, il lui faut gérer simultanément le type de charge et le mode de découpage de phase. Pour compléter le cahier des charges, le type de variateur qui est concerné par l'invention n'est pas relié au neutre. Il est par conséquent raccordé entre la phase du réseau et la charge lumineuse, et s'alimente dès lors à travers ladite charge. Or, selon le cas, l'alimentation proprement dite du variateur peut nécessiter un courant qui n'est pas négligeable, dont la nécessaire dérivation à des fins d'alimentation peut avoir un impact sur le fonctionnement de lampes de petite puissance. C'est notamment le cas lorsque le variateur est pourvu d'une interface de commande nécessitant beaucoup d'énergie, par exemple lorsqu'il est doté d'une interface radiofréquence pilotable par une télécommande.

Dans une telle hypothèse de partage de l'énergie disponible entre l'alimentation du variateur pour le faire fonctionner et les charges lumineuses, l'adaptation automatique du dispositif variateur de lumière pose plusieurs problèmes. Ainsi, par exemple, pour une lampe de type fluo-compacte de petite puissance, lorsque la consigne ou le niveau d'éclairage est important, la phase durant laquelle la lampe n'est pas alimentée et qui sert à fournir l'énergie au variateur n'est plus suffisante pour le faire fonctionner en mode coupure à l'angle utilisé de manière privilégiée pour limiter les émissions conduites. L'énergie n'est pas suffisante notamment du fait du caractère fortement capacitif des lampes CFL de petite puissance. Le variateur ne peut alors plus fonctionner. Il faut passer en mode de conduction à l'angle et l'adapter au problème des émissions conduites, comme on l'a vu précédemment, en modifiant la vitesse de commutation. En cas de pilotage d'ampoules à filament, il faudrait repasser en mode coupure à l'angle, en raison des échauffements qui résulteraient du fonctionnement en mode conduction à l'angle, non recommandé avec la technologie habituellement utilisée dans ces produits.

Pour toutes ces raisons, les dispositifs variateurs de l'intensité de la lumière dans des charges lumineuses proposés jusqu'ici sur le marché et conçus pour faire fonctionner des ampoules à filament - et fonctionnant à cet effet avantageusement en mode de coupure à l'angle - ne permettent pas de commander des ampoules fluo-compactes de petite puissance.

La présente invention remédie à cette situation, et permet de commander à la fois des charges de type fluo-compactes, quelle que soit leur puissance, et les lampes plus classiques incandescentes ou encore halogènes, sans intervention de l'utilisateur. La solution utilisée relève à la fois de la structure du dispositif variateur, qui présente des moyens particuliers permettant la gestion de tous ces types de charge, et d'un procédé de gestion interne, qui tire partie de paramètres mesurés dans le dispositif pour s'adapter à la charge lumineuse à gérer.

A cet effet, le dispositif variateur de l'invention, du type « deux fils » c'est à dire fonctionnant sans raccordement au neutre, comporte classiquement une unité de contrôle de type microcontrôleur commandant un étage de puissance de découpage de phase connecté entre la phase du secteur et au moins une charge lumineuse, ainsi qu'une alimentation à découpage lui permettant de fonctionner et raccordée en sortie d'un étage de redressement/lissage de la tension entre phase et charge.

Selon l'invention, ce dispositif se caractérise à titre essentiel en ce qu'il comprend des moyens de détection de la chute de la tension alimentant l'alimentation à découpage.

Ces moyens de détection ont plusieurs finalités. Au premier chef, le but est de tester la tension en entrée de l'alimentation à découpage, qui baisse sensiblement dès lors que le variateur pilote une charge lumineuse à une consigne élevée, et est susceptible de compromettre le fonctionnement même du variateur par insuffisance d'alimentation. Dans un premier temps, si la puissance de la charge lumineuse le permet, on cherche simplement à abaisser la consigne maximale pour dériver de l'énergie vers l'alimentation. Pour les lampes fluo-compactes, fonctionnant en général en mode coupure à l'angle, cet abaissement de consigne maximale est visuellement négligeable, et assimilable à la consigne maximale. Dans l'hypothèse où l'abaissement de consigne maximale a déjà été effectué, la baisse de tension signale typiquement une charge lumineuse particulière, par exemple une lampe fluo-compacte de petite puissance, et le système change de mode de découpage pour passer au mode de conduction à l'angle.

Selon une possibilité, les moyens de détection comportent un comparateur comparant un seuil de tension prédéterminé à une tension mesurée en sortie de l'étage de redressement/lissage.

De préférence, le comparateur comporte d'ailleurs deux seuils de tensions commutables.

L'existence d'un deuxième seuil permet de gérer les coupures d'alimentation qui peuvent toujours survenir sur le secteur, et qui sont détectées lorsque la tension mesurée est inférieure au second seuil prédéterminé, le plus bas.

Dans l'invention, l'étage de redressement/lissage comporte un redresseur connecté entre la phase et la charge, alimentant une capacité réservoir raccordée en entrée de l'alimentation à découpage, en parallèle de laquelle est connecté un pont de résistances entre lesquelles est mesurée la tension à comparer aux deux seuils.

La tension qui est traitée par les moyens de détection est donc une fraction de la tension disponible en sortie de l'étage de redressement/lissage, de manière à la rendre compatible avec le niveau de tension d'entrée du comparateur desdits moyens de détection.

Ceux-ci peuvent constituer un étage de détection connecté en amont de l'unité de contrôle ou, alternativement, être inclus dans ladite unité, par exemple dans un microcontrôleur classique.

La gestion des deux seuils de tension prédéterminés s'effectue via des moyens de commutation matériels ou logiciels qui permettent de commuter les deux seuils et par conséquent d'effectuer la comparaison de la tension mesurée séquentiellement avec les deux seuils.

L'unité de contrôle, dans la mesure où elle pilote l'étage de puissance de découpage de phase, y est raccordée via un réseau RC fixant la vitesse de commutation des composants qui le constituent. Ce réseau est en principe adapté à la presque totalité des fonctionnements et des charges.

On a mentionné auparavant le fait que la commande des lampes fluo-compactes de faible puissance en mode conduction à l'angle n'est possible que si ce mode est adapté, en termes d'émissions conduites, c'est-à-dire pourvu de moyens d'adapter la vitesse de communication des transistors de commande de la charge.

A cet effet, un transistor commandé par l'unité de contrôle permet d'ajouter une capacité additionnelle au réseau RC pour modifier la vitesse de commutation des composants de l'étage de puissance.

Le dispositif variateur de l'invention comporte par ailleurs un étage de détection du passage par zéro de la tension aux bornes de l'étage de puissance dont la sortie est reliée à l'unité de contrôle. Cet étage permet de synchroniser la commande par l'unité de contrôle de l'étage de puissance, lequel par exemple classiquement constitué de deux transistors de puissance MOSFET disposés tête-bêche entre la phase et la charge.

Le dispositif de l'invention comporte également un étage de détection du passage au voisinage de zéro de la tension aux bornes de l'étage de puissance dont la sortie est reliée à l'unité de contrôle.

Cette tension est testée car elle est en fait une image du courant qui circule dans la charge en mode conduction à l'angle. Les lampes de type Fluo-compactes ou de type LED comprennent un condensateur de plusieurs *µ*F en entrée de leur circuit d'alimentation. La forme du courant qui circule dans la lampe ressemble à une impulsion de courant qui dure environ 1 à 2 ms sur la durée de commande (par exemple 1 ou 2 ms pour 5 ms sur 10 ms de la demi-période du secteur, à une consigne de commande de 50%).

Le passage par zéro du courant qui traverse ce type de charge n'est donc pas bien "positionné" par rapport au passage par zéro du secteur. Il s'agit d'une "zone" de quelques ms où le courant est proche de zéro (donc la tension d'entrée au niveau des moyens de détection est aussi proche de zéro, mais pas complètement nulle). Au lieu de détecter le passage par zéro réel (c'est à dire le changement de polarité), il faut alors fixer un seuil de détection pour un courant faible mais supérieur à zéro, ou encore - comme c'est le cas en l'espèce - pour une tension faible supérieure à zéro pour les moyens de détection.

Ce signal est suffisamment constant avec ce type de lampes pour être exploité comme un signal de synchronisation. Il reste cependant à faire une remise en phase par programme au zéro réel.

L'étage de détection du passage au voisinage de zéro de la tension est, selon une possibilité, basé sur un comparateur comparant à une tension de référence prédéterminée une tension de sortie d'un même pont résistif connecté respectivement à la phase et à la charge.

Les modifications dans le pilotage du dispositif variateur de l'intensité de la lumière auquel sont appliquées des consignes de commande de la charge, notamment destinées à l'adapter à des charges lumineuses variées telles que décrites auparavant, sont gérées au travers d'un procédé de fonctionnement qui s'exprime, selon l'invention, par les caractéristiques suivantes :
a/ comparaison de la tension mesurée en sortie de l'étage de redressement/lissage avec un premier des deux seuils de l'étage de détection de la chute de la tension alimentant l'alimentation à découpage ;
b/ si ladite tension est inférieure à ce premier seuil, comparaison avec le second seuil ;
c/ si ladite tension est supérieure à ce second seuil, vérifier si le fonctionnement du dispositif est en mode coupure à l'angle ;
d/ si le fonctionnement du dispositif est en mode coupure à l'angle, contrôler si l'angle de consigne correspond à une valeurs de consigne supérieure ou égale à 6 ms, et passer à cette consigne dans cette hypothèse ;
e/ sinon, passer en mode conduction à l'angle.

Comme cela a été mentionné, dans l'hypothèse e/, le procédé de l'invention est prévu pour que l'unité de commande puisse envoyer un signal au transistor contrôlant l'ajout d'une capacité additionnelle au réseau RC, pour modifier la vitesse de commutation de l'étage de puissance de commutation.

L'invention va à présent être décrite en référence aux figures annexées, pour lesquelles :
la figure 1 est un schéma électronique d'un dispositif variateur de l'intensité de la lumière dans des charges lumineuses selon l'invention ; et
la figure 2 montre un organigramme illustrant le procédé de fonctionnement d'un tel dispositif.

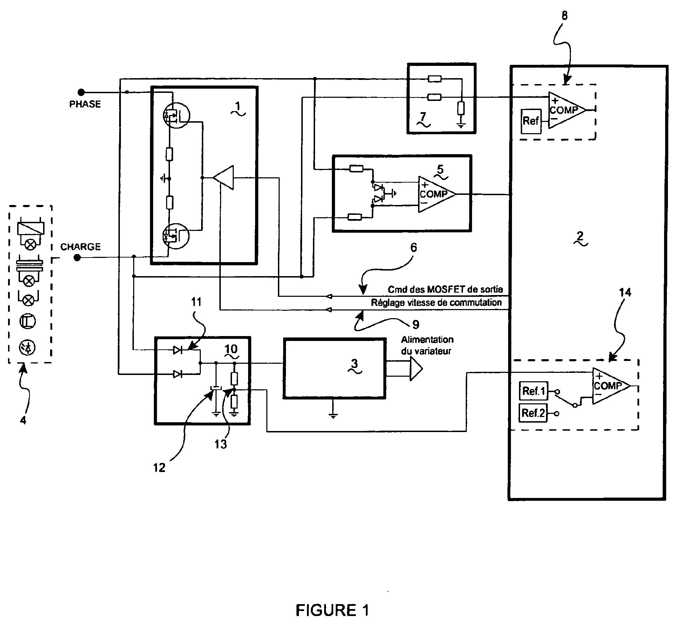

En référence à la figure 1, le dispositif variateur de l'invention comporte à titre principal un étage de puissance (1) de découpage de phase, un microcontrôleur (2) et une alimentation à découpage (3). L'étage de puissance (1) est classiquement basé sur deux transistors MOSFET de puissance dont la commutation permet l'alimentation en mode de coupure à l'angle ou de conduction à l'angle des charges (4) connectées en sortie de cet étage de puissance (1). Le dispositif de l'invention est un variateur de type "deux fils", c'est-à-dire qu'il n'est pas relié au neutre, mais uniquement entre la phase du réseau et la charge lumineuse. Un tel dispositif s'alimente par conséquent à travers la charge lumineuse. Il comporte par ailleurs un étage de détection du passage par zéro (5) du courant dans la charge, dont on a noté auparavant qu'il permet de synchroniser la commande des transistors MOSFET via la liaison (6) en sortie du microcontrôleur (2), de façon que les découpages de phase soient mis en oeuvre de façon précise relativement à la courbe de tension secteur. Un étage de détection du passage à proximité de zéro (7) est par ailleurs associé à un comparateur (8) représenté intégré au microcontrôleur (2), mais qui peut optionnellement faire l'objet d'une unité distincte, dès lors raccordé entre l'étage (7) et le microcontrôleur (2).

Dans la plupart des cas, comme on l'a vu, le fonctionnement s'effectue en mode de coupure à l'angle, qui correspond à la majorité des charges lumineuses (4) disposées en sortie du dispositif de l'invention. Dans l'hypothèse particulière des lampes fluo-compactes de petite puissance, le fonctionnement s'effectue en mode de conduction à l'angle et nécessite un réglage de la vitesse de communication afin de limiter les émissions conduites. Ce réglage est commandé par le microcontrôleur via la liaison (9).

L'alimentation à découpage (3), permettant in fine l'alimentation du variateur, s'effectue via un étage de redressement / lissage (10) comportant un redresseur (11) raccordé entre la phase et la charge et permettant d'alimenter un condensateur réservoir (12). Un pont de résistance (13), connecté en parallèle à la capacité réservoir (12), est prévu pour mesurer une fraction de la tension disponible en sortie de ladite capacité (12), fraction de tension envoyée vers des moyens de détection (14) comportant un comparateur apte à la comparer de manière distincte avec deux tensions de référence, le résultat des comparaisons étant utilisé dans le procédé de fonctionnement qui sera décrit ultérieurement.

C'est l'unité de contrôle constituée du microcontrôleur (2) qui réalise les différents traitements logiques nécessaires au fonctionnement automatisé de l'ensemble, dont à titre principal la commande des transistors MOSFET en fournissant une consigne et une indication de réglage de la vitesse de commutation en fonction du mode de découpage. Il est à noter que le comparateur constituant les moyens de détection (14), représenté interne au microcontrôleur (2), peut également constituer un étage externe.

Le premier seuil prédéfini Réf1 correspond au moment où il est nécessaire de modifier soit l'angle de consigne maximal en mode de coupure à l'angle, soit de basculer en mode de conduction à l'angle. Le deuxième seuil prédéfini Réf2 permet la détection d'une coupure secteur : le dispositif, par l'intermédiaire du microcontrôleur (2), peut alors procéder à des sauvegardes de contextes de fonctionnement, avant la coupure définitive de l'alimentation.

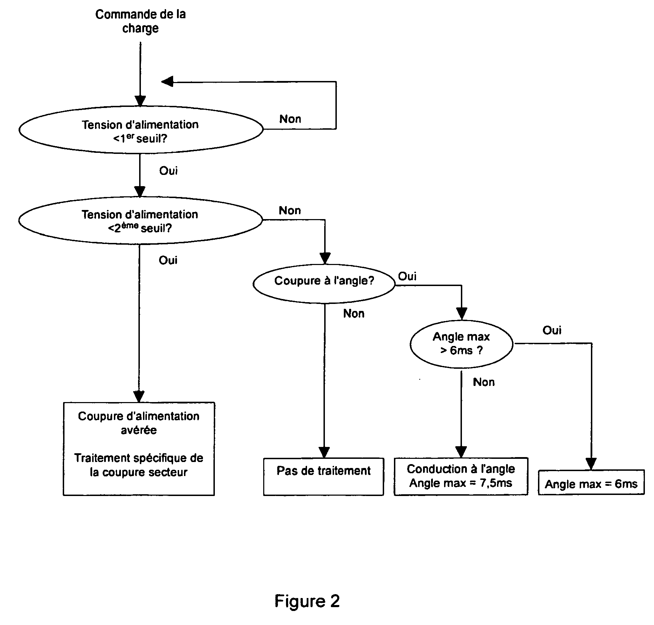

Comme le montre l'organigramme de la figure 2, qui correspond au fonctionnement du procédé de l'invention, le dispositif variateur "deux fils" selon l'invention peut fonctionner par exemple avec des lampes fluo-compactes de petite puissance grâce à la procédure de détection de la chute de tension d'alimentation, qui permet notamment d'adapter la consigne maximale en mode de coupure à l'angle si la nature de la charge lumineuse le permet, et finalement le basculement en mode conduction à l'angle si nécessaire. L'utilisateur n'est donc pas astreint à une manipulation en vue de modifier la configuration du dispositif suivant la charge lumineuse connectée.

En référence à la figure 2, au cours d'une commande de charge lumineuse mise en oeuvre par le dispositif de l'invention, le microcontrôleur teste en permanence si la tension disponible en sortie du pont résistif (13) est inférieure au premier seuil Réf1 : dans l'hypothèse où c'est le cas, il la compare ensuite au second seuil Réf2 afin de vérifier l'hypothèse d'une coupure d'alimentation. Si cette tension issue du pont (13) de l'étage (10) est inférieure au second seuil Réf2, le microcontrôleur effectue des sauvegardes avant que l'alimentation de l'ensemble soit déficiente.

Dans l'hypothèse inverse, et si le dispositif fonctionne en mode de coupure à l'angle, le microcontrôleur (2) teste l'angle de consigne maximale par rapport à la valeur mentionnée auparavant correspondant à 6 ms. Si l'angle maximal correspond à une valeur supérieure à 6 ms, ce qui est possible puisqu'en 50 Hz une telle consigne maximale peut monter jusqu'à 7,5 ms, le dispositif l'abaisse dans un premier temps à cette valeur de 6 ms. Pour les lampes fluo-compactes, cette modification n'est quasiment pas perceptible à l'oeil humain.

Si cela s'avère insuffisant, et que la tension en sortie du pont résistif (13) est toujours inférieure au premier seuil d'alimentation, le microcontrôleur (2) fait basculer le fonctionnement en mode de conduction à l'angle, en ajoutant à la commande classique des MOSFET via la liaison (6) l'émission d'un signal via la liaison (9) permettant de commuter le transistor ajoutant un condensateur modifiant la valeur du réseau RC commandant la vitesse de commutation.

Les valeurs des composants sont choisies de telle sorte que le condensateur réservoir (12) est chargé à environ 325 V en continu. Lorsque le variateur pilote une lampe à la consigne maximale de 7,5 ms, cette tension baisse sensiblement jusqu'à une valeur proche de 100 V, encore compatible avec l'alimentation du variateur, pour lequel la limite est de 50 V.

Si la charge lumineuse est de faible puissance et de type fluo-compacte, la tension baisse davantage en mode de coupure à l'angle, car il y a un condensateur en entrée du circuit d'alimentation de la charge fluo-compacte qui ne peut se décharger rapidement lors de la phase de coupure dans la mesure où les autres éléments du circuit de ladite charge ont une forte impédance.

La tension présente aux bornes du dispositif de l'invention n'est alors plus suffisante pour maintenir un courant de charge suffisant pour charger la capacité réservoir (12).

La tension en sortie du condensateur réservoir, qui serait descendue de 325 V à 100 V par exemple avec une charge lumineuse de type lampe à filament à consigne élevée, s'abaisse alors encore et de manière continue vers zéro, ne permettant plus d'alimenter correctement le variateur.

En revanche, si l'on passe alors en mode de conduction à l'angle, la phase de coupure démarre au passage par zéro de la tension secteur, et la tension de charge du condensateur de la lampe suit naturellement la sinusoïde de la tension secteur, ce qui permet d'accompagner la décharge du condensateur et de présenter une tension plus forte à l'entrée du variateur lors de la phase de coupure.

Il est alors possible de commander une charge lumineuse par exemple de type lampe fluo-compacte de petite puissance sans modification manuelle du dispositif variateur de l'invention, qui peut être considéré comme universel en ce qu'il peut gérer toutes sortes de charges lumineuses de toutes puissances de façon totalement automatisée.

## Revendications

1. Dispositif variateur de l'intensité de la lumière dans des charges lumineuses pouvant être par exemple de type "Fluo compact dimmables" ou "LED dimmables", ledit dispositif étant de type sans raccordement au neutre, comportant une unité de contrôle (2) de type microcontrôleur commandant un étage de puissance de découpage de phase (1) connecté entre la phase du secteur et au moins une charge lumineuse (4), une alimentation à découpage (3) alimentant le dispositif variateur, et un étage de redressement/lissage (10) de la tension entre phase et charge raccordé en amont de ladite alimentation à découpage (3), **caractérisé en ce que** le dispositif variateur comprend des moyens de détection (14) de la chute de la tension alimentant l'alimentation à découpage (3), ces moyens de détection permettant au dispositif variateur d'abaisser l'angle de consigne de la charge lumineuse si le dispositif fonctionne en coupure à l'angle.

2. Dispositif variateur de l'intensité de la lumière dans des charges lumineuses citées dans la revendication 1, selon la revendication précédente, **caractérisé en ce que** les moyens de détection (14) comportent un comparateur comparant un seuil de tension prédéterminé à une tension mesurée en sortie de l'étage de redressement/lissage (10).

3. Dispositif variateur de l'intensité de la lumière dans des charges lumineuses citées dans la revendication 1, selon la revendication précédente, **caractérisé en ce que** le comparateur comporte deux seuils de tensions commutables (ref 1, ref 2).

4. Dispositif variateur de l'intensité de la lumière dans des charges lumineuses citées dans la revendication 1, selon la revendication précédente, **caractérisé en ce que** l'étage de redressement/lissage (10) comporte un redresseur (11) connecté entre la phase et la charge, alimentant une capacité réservoir (12) raccordée en entrée de l'alimentation à découpage (3), en parallèle de laquelle est connecté un pont de résistance (13) entre lesquelles est mesurée la tension à comparer aux deux seuils (ref 1, ref 2).

5. Dispositif variateur de l'intensité de la lumière dans des charges lumineuses citées dans la revendication 1, selon l'une des revendications 2 à 4, **caractérisé en ce que** des moyens de commutation matériels ou logiciels permettent de commuter les deux seuils (ref 1, ref 2).

6. Dispositif variateur de l'intensité de la lumière dans des charges lumineuses citées dans la revendication 1, selon l'une quelconque des revendications précédentes, **caractérisé en ce que** l'unité de contrôle (2) est raccordée à l'étage de puissance de découpage de phase (1) via un réseau RC fixant la vitesse de commutation des composants qui le constituent.

7. Dispositif variateur de l'intensité de la lumière dans des charges lumineuses citées dans la revendication 1, selon la revendication précédente, **caractérisé en ce qu'**un transistor commandé par l'unité de contrôle (2) permet d'ajouter une capacité additionnelle au réseau RC.

8. Dispositif variateur de l'intensité de la lumière dans des charges I lumineuses citées dans la revendication 1, selon l'une quelconque des revendications précédentes, **caractérisé en ce qu'**il comprend un étage de détection du passage par zéro (5) de la tension secteur aux bornes du variateur dont la sortie est reliée à l'unité de contrôle (2).

9. Dispositif variateur de l'intensité de la lumière dans des charges lumineuses citées dans la revendication 1, selon l'une quelconque des revendications précédentes, **caractérisé en ce qu'**il comprend un étage de détection du passage au voisinage de zéro (7)de la tension secteur aux bornes du variateur, image du courant dans la charge (4) en mode conduction à l'angle, dont la sortie est reliée à l'unité de contrôle (2).

10. Dispositif variateur de l'intensité de la lumière dans des charges lumineuses citées dans la revendication 1, selon la revendication précédente, **caractérisé en ce que** l'étage de détection du passage au voisinage de zéro (7) de la tension secteur comporte un comparateur (8) comparant à une tension de référence (ref) prédéterminée une tension de sortie d'un même pont résistif connecté respectivement à la phase et à la charge (4).

11. Procédé de fonctionnement d'un dispositif variateur de l'intensité de la lumière dans des charges lumineuses selon les revendications précédentes auquel sont appliquées des consignes de commande de la charge (4), **caractérisé par** les étapes suivantes :
a/ comparaison de la tension mesurée en sortie de l'étage de redressement/lissage (10) avec un premier des deux seuils (ref 1, ref 2) des moyens de détection de la chute de la tension (14) alimentant l'alimentation à découpage (2) ;
b/ si ladite tension est inférieure à ce premier seuil, comparaison avec le second seuil;
c/ si ladite tension est supérieure à ce second seuil, vérifier si le fonctionnement du dispositif est en mode coupure à l'angle ;
d/ si le fonctionnement du dispositif est en mode coupure à l'angle, contrôler si l'angle de consigne correspond à une valeur de consigne supérieure à 6 ms, et passer à cette consigne dans cette hypothèse ;
e/ sinon, passer en mode conduction à l'angle.

12. Procédé de fonctionnement d'un dispositif variateur de l'intensité de la lumière selon la revendication précédente, **caractérisé en ce que**, en cas de passage en mode conduction à l'angle, l'unité de commande envoie un signal au transistor contrôlant l'ajout d'une capacité additionnelle au réseau RC, pour modifier la vitesse de commutation de l'étage de puissance de commutation (1).

## Patentansprüche

1. Vorrichtung zum Dimmen der Lichtintensität in Leuchtladungen, die beispielsweise vom Typ "dimmbare Kompaktleuchtstofflampen" oder "dimmbare LED" sein können, wobei diese Vorrichtung von der Art derer ohne Verbindung mit einem Neutralleiter ist, umfassend eine Steuereinheit (2) des Typs Micro-Controler, der eine Phasenabschnittsleistungsstufe (1) steuert, die zwischen der Phase des Netzes und wenigstens einer Leuchtladung (4) angeschlossen ist, ein Schaltnetzteil (3), das die Vorrichtung zum Dimmen versorgt, und eine Gleichrichter-/ Glättungsstufe (10) der Spannung zwischen Phase und Last, die vor dem Schaltnetzteil (3) angeschlossen ist, **dadurch gekennzeichnet, dass** die Vorrichtung zum Dimmen Mittel (14) zur Erfassung des Abfalls der Spannung umfasst, welche die Schaltversorgung (3) versorgt, wobei die Detektionsmittel es der Vorrichtung zum Dimmen ermöglichen, den Sollwinkel der Leuchtladung abzusenken, wenn die Vorrichtung mit Winkelabschaltung arbeitet.

2. Vorrichtung zum Dimmen der Lichtintensität in Leuchtladungen wie in Anspruch 1 angegeben, nach dem vorhergehenden Anspruch, **dadurch gekennzeichnet, dass** die Detektionsmittel (14) einen Vergleicher umfassen, der eine vorbestimmte Spannungsschwelle mit einer gemessenen Spannung am Ausgang der Gleichrichter-/ Glättungsstufe (10) vergleicht.

3. Vorrichtung zum Dimmen der Lichtintensität in Leuchtladungen wie in Anspruch 1 angegeben, nach dem vorhergehenden Anspruch, **dadurch gekennzeichnet, dass** der Vergleicher zwei Schwellen schaltbarer Spannungen (ref 1, ref 2) umfasst.

4. Vorrichtung zum Dimmen der Lichtintensität in Leuchtladungen wie in Anspruch 1 angegeben, nach dem vorhergehenden Anspruch, **dadurch gekennzeichnet, dass** die Gleichrichter-/Glättungsstufe (10) einen Gleichrichter umfasst, der zwischen der Phase und der Ladung angeschlossen ist und einen Kapazitätsspeicher (12) versorgt, der am Eingang des Schaltnetzteils (3) angeschlossen ist, wobei parallel zu diesem eine Widerstandsbrücke (13) angeschlossen ist, zwischen der die mit den zwei Schwellen (ref 1, ref 2) zu vergleichende Spannung gemessen wird.

5. Vorrichtung zum Dimmen der Lichtintensität in Leuchtladungen wie in Anspruch 1 angegeben, nach einem der Ansprüche 2 bis 4, **dadurch gekennzeichnet, dass** Hardware- oder Software-Schaltmittel es ermöglichen, die zwei Schwellen (ref 1, ref 2) umzuschalten.

6. Vorrichtung zum Dimmen der Lichtintensität in Leuchtladungen wie in Anspruch 1 angegeben, nach einem der vorhergehenden Ansprüche, **dadurch gekennzeichnet, dass** die Steuereinheit (2) über ein RC-Netz, welches die Schaltgeschwindigkeit der Komponenten, die es bildet, festlegt, an die Phasenabschnittsleistungsstufe (1) angeschlossen ist.

7. Vorrichtung zum Dimmen der Lichtintensität in Leuchtladungen wie in Anspruch 1 angegeben, nach dem vorhergehenden Anspruch, **dadurch gekennzeichnet, dass** ein Transistor, der durch die Steuereinheit (2) geregelt wird, es ermöglicht, dem RC-Netz eine zusätzliche Kapazität hinzuzufügen.

8. Vorrichtung zum Dimmen der Lichtintensität in Leuchtladungen wie in Anspruch 1 angegeben, nach einem der vorhergehenden Ansprüche, **dadurch gekennzeichnet, dass** sie eine Stufe zur Erfassung des Durchgangs durch Null (5) der Netzspannung an den Anschlüssen des Dimmers umfasst, deren Ausgang mit der Steuereinheit (2) verbunden ist.

9. Vorrichtung zum Dimmen der Lichtintensität in Leuchtladungen wie in Anspruch 1 angegeben, nach einem der vorhergehenden Ansprüche, **dadurch gekennzeichnet, dass** sie eine Stufe zur Erfassung des Durchgangs in der Nähe von Null (7) der Netzspannung an den Anschlüssen des Dimmers umfasst, einem Abbild des Stroms in der Ladung (4) im Winkelleitungsmodus, deren Ausgang mit der Steuereinheit (2) verbunden ist.

10. Vorrichtung zum Dimmen der Lichtintensität in Leuchtladungen wie in Anspruch 1 angegeben, nach dem vorhergehenden Anspruch, **dadurch gekennzeichnet, dass** die Stufe zur Erfassung des Durchgangs in der Nähe von Null (7) der Netzspannung einen Vergleicher (8) umfasst, der eine Ausgangsspannung einer gleichen Widerstandsbrücke, die jeweils an die Phase und an die Ladung (4) angeschlossen ist, mit einer vorbestimmten Referenzspannung (ref) vergleicht.

11. Verfahren zum Betrieben einer Vorrichtung zum Dimmen der Lichtintensität in Leuchtladungen nach den vorhergehenden Ansprüchen, auf die Sollwerte zum Steuern der Ladung (4) angewendet werden, **gekennzeichnet durch** die folgenden Schritte:
a) Vergleich der gemessenen Spannung am Ausgang der Glättungs-/Gleichrichterstufe (10) mit einer ersten von zwei Schwellen (ref 1, ref 2) der Mittel zum Erfassen des Abfalls der Spannung (14), die das Schaltnetzteil (2) versorgt;
b) wenn die Spannung unter einem ersten Schwellenwert ist, Vergleich mit dem zweiten Schwellenwert;
c) wenn die Spannung oberhalb dieser zweiten Schwelle ist, Überprüfen, ob die Vorrichtung im Modus Winkelabschaltung funktioniert;
d) wenn die Funktion der Vorrichtung im Modus Winkelabschaltung ist, Überprüfen, ob der Sollwinkel einem Sollwert oberhalb von 6 ms entspricht, und Überführen dieses Sollwerts in diese Annahme;
e) wenn nicht, Übergang in den Modus Winkelleitung.

12. Verfahren zum Betreiben einer Vorrichtung zum Dimmen der Lichtintensität nach dem vorhergehenden Anspruch, **dadurch gekennzeichnet, dass** im Fall des Übergangs in den Modus Winkelleitung die Steuereinheit ein Signal an den Transistor schickt, der das Hinzufügen einer zusätzlichen Kapazität zu dem RC-Netz steuert, um die Schaltgeschwindigkeit der Leistungsstufe zum Schalten (1) zu verändern.

## Claims

1. Device for dimming the light intensity emitted by lighting loads possibly of the "dimmable compact fluorescent" or "dimmable LED" type for example, said device being a device requiring no neutral wire, comprising a microcontroller type control unit (2) controlling a phase-cut power stage (1) connected between the phase of the mains and at least one lighting load (4), a switched-mode power supply (3) powering the dimming device, and a stage (10) for rectifying/smoothing the voltage between phase and load, said stage (10) being connected upstream of said switched-mode power supply (3),
**characterized in that** the dimming device comprises means (14) for detecting a drop in the supply voltage of the switched-mode power supply (3), these detecting means allowing the dimming device to decrease the setpoint angle of the lighting load if the device is functioning in a trailing-edge mode.

2. Device for dimming the light intensity emitted by the lighting loads mentioned in Claim 1, according to the preceding claim, **characterized in that** the detecting means (14) comprise a comparator comparing a preset voltage threshold to a voltage measured at the output of the rectifying/smoothing stage (10).

3. Device for dimming the light intensity emitted by the lighting loads mentioned in Claim 1, according to the preceding claim, **characterized in that** the comparator comprises two switchable voltage thresholds (ref 1, ref 2).

4. Device for dimming the light intensity emitted by the lighting loads mentioned in Claim 1, according to the preceding claim, **characterized in that** the rectifying/smoothing stage (10) comprises a rectifier (11) connected between the phase and the load, supplying a storage capacitor (12) connected to the input of the switched-mode power supply (3), in parallel with which is connected a resistive bridge (13) between which the voltage to be compared to the two thresholds (ref 1, ref 2) is measured.

5. Device for dimming the light intensity emitted by the lighting loads mentioned in Claim 1, according to one of Claims 2 to 4, **characterized in that** hardware or software switching means allow the two thresholds (ref 1, ref 2) to be switched.

6. Device for dimming the light intensity emitted by the lighting loads mentioned in Claim 1, according to any one of the preceding claims, **characterized in that** the control unit (2) is connected to the phase-cut power stage (1) via an RC network setting the switching speed of the components that make it up.

7. Device for dimming the light intensity emitted by the lighting loads mentioned in Claim 1, according to the preceding claim, **characterized in that** a transistor controlled by the control unit (2) allows an additional capacitor to be added to the RC network.

8. Device for dimming the light intensity emitted by the lighting loads mentioned in Claim 1, according to any one of the preceding claims, **characterized in that** it comprises a stage (5) for detecting the zero crossing of the mains voltage across the terminals of the dimmer, the output of which is connected to the control unit (2).

9. Device for dimming the light intensity emitted by the lighting loads mentioned in Claim 1, according to any one of the preceding claims, **characterized in that** it comprises a stage (7) for detecting when the mains voltage across the terminals of the dimmer is within the vicinity of zero, image of the current in the load (4) in leading-edge mode, and the output of which is connected to the control unit (2).

10. Device for dimming the light intensity emitted by the lighting loads mentioned in Claim 1, according to the preceding claim, **characterized in that** the stage (7) for detecting when the mains voltage is within the vicinity of zero comprises a comparator (8) comparing to a preset reference voltage (ref) an output voltage of a resistive bridge connected to the phase and to the load (4), respectively.

11. Method for operating a device for dimming the light intensity emitted by lighting loads according to the preceding claims, in which device are applied setpoints for controlling the load (4), **characterized by** the following steps:
a/ comparing the voltage measured at the output of the rectifying/smoothing stage (10) with a first of the two thresholds (ref 1, ref 2) of the means (14) for detecting a drop in the supply voltage of the switched-mode power supply (2);
b/ if said voltage is lower than this first threshold, comparing it with the second threshold;
c/ if said voltage is higher than this second threshold, verifying whether the device is operating in trailing-edge mode;
d/ if the device is operating in trailing-edge mode, checking whether the setpoint angle corresponds to a setpoint value higher than 6 ms, and applying this setpoint if this is the case; and
e/ otherwise, passing into leading-edge mode.

12. Method for operating a device for dimming light intensity according to the preceding claim, **characterized in that**, in case of passage into leading-edge mode, the control unit sends a signal to the transistor controlling the addition of an additional capacitance to the RC network, in order to modify the switching speed of the switching power stage (1).
